(19) Europäisches Patentamt
European Patent Office
Office européen des brevets

(11) **EP 3 983 733 B1**

(12) **FASCICULE DE BREVET EUROPEEN**

(45) Date de publication et mention
de la délivrance du brevet:
**21.08.2024 Bulletin 2024/34**

(21) Numéro de dépôt: **20731862.7**

(22) Date de dépôt: **10.06.2020**

(51) Classification Internationale des Brevets (IPC):
*F25B 5/04* *(2006.01)*  *F25B 6/04* *(2006.01)*
*F25B 5/02* *(2006.01)*  *F25B 25/00* *(2006.01)*
*F25B 49/02* *(2006.01)*  *B60H 1/00* *(2006.01)*
*B60H 1/32* *(2006.01)*

(52) Classification Coopérative des Brevets (CPC):
**F25B 5/04; B60H 1/00921; B60H 1/3216;
B60H 1/323; F25B 5/02; F25B 6/04; F25B 25/005;
F25B 41/385; F25B 41/39; F25B 49/02;
F25B 49/022;** B60H 2001/00307;
B60H 2001/00928; F25B 2600/025;
F25B 2600/0253; (Cont.)

(86) Numéro de dépôt international:
**PCT/EP2020/066010**

(87) Numéro de publication internationale:
**WO 2020/249579 (17.12.2020 Gazette 2020/51)**

(54) **PROCÉDÉ DE GESTION D'UN DISPOSITIF DE GESTION THERMIQUE POUR UN VÉHICULE AUTOMOBILE ET DISPOSITIF DE GESTION THERMIQUE ASSOCIÉ**

VERFAHREN ZUR VERWALTUNG EINES THERMISCHEN VERWALTUNGSGERÄTS FÜR EIN KRAFTFAHRZEUG UND EIN ZUGEHÖRIGES THERMISCHES VERWALTUNGSGERÄT

A METHOD FOR MANAGING A THERMAL MANAGEMENT DEVICE FOR A MOTOR VEHICLE AND AN ASSOCIATED THERMAL MANAGEMENT DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.06.2019 FR 1906394**

(43) Date de publication de la demande:
**20.04.2022 Bulletin 2022/16**

(73) Titulaire: **VALEO SYSTEMES THERMIQUES**
**78320 Le Mesnil Saint-Denis (FR)**

(72) Inventeurs:
• **NICOLAS, Bertrand**
**78320 Le Mesnil Saint Denis (FR)**
• **LIU, Jin-Ming**
**78320 Le Mesnil Saint Denis (FR)**
• **YAHIA, Mohamed**
**78320 Le Mesnil Saint Denis (FR)**

(56) Documents cités:
**EP-A2- 3 228 958  FR-A1- 3 070 316
US-A1- 2010 023 171**

**(Cont. page suivante)**

(52) Classification Coopérative des Brevets (CPC):
(Cont.)
F25B 2600/2513; F25B 2700/197;
F25B 2700/21173; F25B 2700/21175

**Description**

La présente invention concerne un procédé de gestion d'un dispositif de gestion thermique pour véhicule automobile et le dispositif de gestion thermique pour la mise en oeuvre d'un tel procédé. Plus précisément, l'invention concerne un procédé de gestion pour un dispositif de gestion thermique comportant un circuit de fluide réfrigérant comprenant deux évaporateurs disposés en parallèle l'un de l'autre et comportant chacun un dispositif de détente du fluide réfrigérant dédié disposé en amont.

En règle générale, les deux évaporateurs sont dédiés au refroidissement d'éléments distincts comme par exemple un flux d'air interne à destination de l'habitacle du véhicule automobile pour un premier évaporateur et des éléments électroniques et/ou électriques tels que des batteries pour un deuxième évaporateur. Il peut néanmoins arriver qu'une utilisation simultanée des deux évaporateurs en parallèle, afin d'atteindre des températures demandées pour chacun de ces éléments, demande une puissance de refroidissement supérieure à la puissance de refroidissement maximale pouvant être délivrée par le dispositif de gestion thermique. Il est ainsi nécessaire de diminuer la puissance allouée à l'un ou l'autre des évaporateurs en fonction d'une priorité déterminée par des paramètres tels que la température des éléments à refroidir, des températures consignes à atteindre pour chacun de ces éléments et des conditions définies par exemple par les constructeurs automobiles. Par exemple, FR 3 070 316 Al dévoile un dispositif de gestion thermique pour véhicule automobile selon le préambule de la revendication 5.

Un des buts de la présente invention est donc de proposer un procédé de gestion d'un dispositif de gestion thermique afin de prioriser l'un ou l'autre des évaporateurs ainsi que de proposer un dispositif de gestion thermique adapté pour un tel procédé de gestion.

La présente invention concerne donc un procédé de gestion d'un dispositif de gestion thermique pour véhicule automobile comportant un circuit de fluide réfrigérant dans lequel est destiné à circuler un fluide réfrigérant, ledit circuit de fluide réfrigérant comportant :

- une boucle principale comportant, dans le sens de circulation du fluide réfrigérant, un compresseur, un condenseur configuré pour échanger de l'énergie calorifique avec un premier élément, un premier dispositif de détente et un premier évaporateur configuré pour échanger de l'énergie calorifique avec un deuxième élément,
- une branche de dérivation disposée en parallèle du premier dispositif de détente et du premier évaporateur, ladite branche de dérivation comportant un deuxième dispositif de détente et un deuxième évaporateur disposé en aval du deuxième dispositif de détente et configuré pour échanger de l'énergie calorifique avec un troisième élément,

lorsqu'au moins le premier évaporateur est utilisé de sorte que la température du deuxième élément en sortie du premier évaporateur atteigne une température consigne,

qu'une requête d'utilisation du deuxième évaporateur est émise de sorte que le troisième élément atteigne une première température consigne,

que la puissance de refroidissement requise pour le fonctionnement simultané des premier et deuxième évaporateur est supérieure à la capacité de refroidissement maximale du dispositif de gestion thermique, et

que le dispositif de gestion thermique reçoit une requête de priorité de refroidissement via le premier évaporateur, le procédé de gestion comporte les étapes suivantes :

- augmentation de la vitesse de rotation du compresseur jusqu'à sa vitesse maximale,
- détermination d'une température consigne modifiée du troisième élément supérieure à la première température consigne de sorte que la température du deuxième élément en sortie du premier évaporateur tende vers sa température consigne,
- ajustement du diamètre d'ouverture du deuxième dispositif de détente de sorte que la température du troisième élément en sortie du deuxième évaporateur atteigne une température consigne modifiée, jusqu'à ce que la température du deuxième élément en sortie du premier évaporateur atteigne la température consigne.

Selon un aspect du procédé selon l'invention,

lorsqu'au moins le premier évaporateur est utilisé de sorte que la température du deuxième élément en sortie du premier évaporateur atteigne une température consigne,

qu'une requête d'utilisation du deuxième évaporateur est émise de sorte que le troisième élément atteigne une première température consigne,

que la puissance de refroidissement requise est supérieure à la capacité de refroidissement maximale du dispositif de gestion thermique, et

que le dispositif de gestion thermique reçoit une requête de priorité de refroidissement via le deuxième évaporateur, le procédé de gestion comporte les étapes suivantes :

- augmentation de la vitesse de rotation du compresseur jusqu'à sa vitesse maximale,
- ajustement du diamètre d'ouverture du deuxième dispositif de détente jusqu'à ce que la température du troisième élément en sortie du deuxième évaporateur atteigne la première température consigne.

Selon un autre aspect du procédé selon l'invention, le procédé de gestion comporte une étape d'ajustement du diamètre d'ouverture du premier dispositif de détente de sorte que le sous-refroidissement du fluide réfrigérant en sortie du condenseur atteigne une valeur consigne de sous-refroidissement, le sous-refroidissement étant calculé selon la formule suivante :

$$SBC\text{-}calc = TreCO - Tsat(PreCO)$$

avec SBC-calc le sous-refroidissement calculé, TreCO la température du fluide réfrigérant en sortie du condenseur et Tsat(PreCO) la température de saturation du fluide réfrigérant à la pression du fluide réfrigérant en sortie du condenseur.

Selon un autre aspect du procédé selon l'invention, la valeur consigne de sous-refroidissement est déterminée selon la formule suivante :

$$SBC\text{-}sp = (((mr / \ln(Pd + \beta)) / k) - 1) / \alpha$$

avec mr le débit du fluide réfrigérant, Pd la pression de fluide réfrigérant en sortie du compresseur , $\alpha = 4{,}525^{-2}$, $\beta = 1{,}7308$ et $k = 14{,}089 \times d^2$, d étant le diamètre d'ouverture théorique du premier dispositif de détente en millimètre pour un coefficient de performance optimale.

La présente invention concerne également un dispositif de gestion thermique pour véhicule automobile comportant un circuit de fluide réfrigérant dans lequel est destiné à circuler un fluide réfrigérant, ledit circuit de fluide réfrigérant comportant :

- une boucle principale comportant, dans le sens de circulation du fluide réfrigérant, un compresseur, un condenseur configuré pour échanger de l'énergie calorifique avec un premier élément, un premier dispositif de détente et un premier évaporateur configuré pour échanger de l'énergie calorifique avec un deuxième élément,
- une branche de dérivation disposée en parallèle du premier dispositif de détente et du premier évaporateur, ladite branche de dérivation comportant un deuxième dispositif de détente et un deuxième évaporateur disposé en aval du premier deuxième dispositif de détente et configuré pour échanger de l'énergie calorifique avec un troisième élément,

le dispositif de gestion thermique comportant en outre :

- un premier régulateur proportionnel-intégral configuré pour réguler la vitesse de rotation du compresseur en fonction de la différence entre la température du deuxième élément en sortie du premier évaporateur et une température consigne du deuxième élément en sortie du premier évaporateur,
- un deuxième régulateur proportionnel-intégral configuré pour réguler la vitesse de rotation du compresseur en fonction de la différence entre la température du troisième élément en sortie du deuxième évaporateur et une première température consigne du troisième élément en sortie du deuxième évaporateur,
- un premier additionneur disposé en amont du compresseur et configuré pour additionné les signaux de vitesse de rotation en sortie des premier et deuxième régulateurs proportionnel-intégral,
- un troisième régulateur proportionnel-intégral configuré pour ajuster le diamètre d'ouverture du deuxième dispositif de détente en fonction de la différence entre la température du troisième élément en sortie du deuxième évaporateur et une température consigne du troisième élément en sortie du deuxième évaporateur,
- une unité de commande électronique configurée pour déterminer une deuxième température consigne du troisième élément en sortie du deuxième évaporateur selon la différence entre la température du deuxième élément en sortie du premier évaporateur et la température consigne du deuxième élément sortie du premier évaporateur,
- un deuxième additionneur configuré pour additionner la première et la deuxième température consigne du troisième élément en sortie du deuxième évaporateur afin de déterminer la température consigne pour le troisième régulateur proportionnel-intégral.

Selon un autre aspect de l'invention, le dispositif de gestion thermique comporte un quatrième régulateur proportionnel-intégral configuré pour réguler la deuxième température consigne du troisième élément en sortie du deuxième évaporateur en fonction d'une consigne déterminée par l'unité de commande électronique.

Selon un autre aspect de l'invention, le dispositif de gestion thermique comporte un cinquième régulateur proportionnel-intégral configuré pour ajuster le diamètre d'ouverture du premier dispositif de détente en fonction de la différence entre le sous-refroidissement calculé du fluide réfrigérant en sortie du condenseur et la valeur consigne du sous-refroidissement du fluide réfrigérant en sortie du condenseur.

Selon un autre aspect de l'invention :

- le condenseur est un échangeur de chaleur disposé en face avant du véhicule automobile et que le premier élément est un flux d'air externe,
- le premier évaporateur est un échangeur de chaleur disposé au sein d'un dispositif de chauffage, ventilation et air conditionné et que le deuxième élément est un flux d'air interne à destination de l'habitacle, et que
- le deuxième évaporateur est configuré pour refroidir des éléments électriques et/ou électroniques tels que des batteries.

Selon un autre aspect de l'invention, le dispositif de gestion thermique comporte un circuit annexe dans lequel circule le troisième élément, le deuxième évaporateur étant un échangeur de chaleur bifluide configuré pour permettre les échanges de chaleur entre le fluide réfrigérant et le troisième élément.

Selon un autre aspect de l'invention, le dispositif de gestion thermique comporte un limiteur disposé entre le premier additionneur et le compresseur.

D'autres caractéristiques et avantages de la présente invention apparaîtront plus clairement à la lecture de la description suivante, fournie à titre illustratif et non limitatif, et des dessins annexés dans lesquels :

- La figure 1 montre une représentation schématique d'un dispositif de gestion thermique selon un premier mode de réalisation,

- La figure 2 montre une représentation schématique d'un dispositif de gestion thermique selon un deuxième mode de réalisation,

- La figure 3 montre un organigramme des étapes du procédé de gestion thermique lorsqu'une requête de priorité de refroidissement via le premier évaporateur est émise,

- La figure 4 montre un organigramme des étapes du procédé de gestion thermique lorsqu'une requête de priorité de refroidissement via le deuxième évaporateur est émise,

- La figure 5 montre un schéma fonctionnel du dispositif de gestion thermique.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

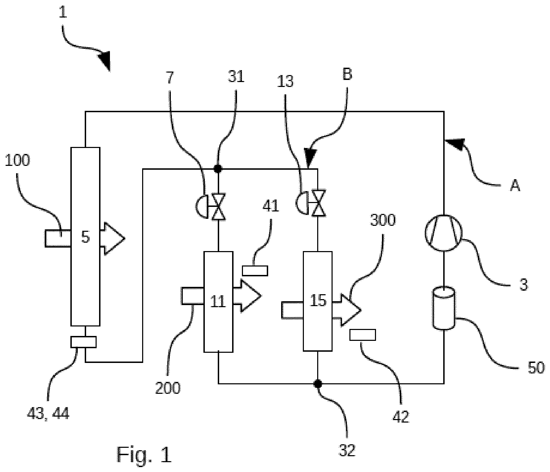

La figure 1 montre une représentation schématique d'un dispositif de gestion thermique 1 pour véhicule automobile selon un mode de réalisation simple. Le dispositif de gestion thermique 1 comporte un circuit de fluide réfrigérant dans lequel est destiné à circuler un fluide réfrigérant. Ce circuit de fluide réfrigérant comporte une boucle principale A comportant, dans le sens de circulation du fluide réfrigérant, un compresseur 3, un condenseur 5 configuré pour échanger de l'énergie calorifique avec un premier élément 100, un premier dispositif de détente 7 et un premier évaporateur 11. Ce premier évaporateur 11 est plus particulièrement configuré pour échanger de l'énergie calorifique avec un deuxième élément 200.

La boucle principale A peut également comporter un dispositif de séparation de phase 50 disposé en amont du compresseur 3.

Le circuit de fluide réfrigérant comporte également une branche de dérivation B disposée en parallèle du premier dispositif de détente 7 et du premier évaporateur 11. Cette branche de dérivation B comporte un deuxième dispositif de détente 13 et un deuxième évaporateur 15 disposé en aval du deuxième dispositif de détente 13. Le deuxième évaporateur 15 est plus particulièrement configuré pour échanger de l'énergie calorifique avec un troisième élément 300.

Plus précisément, la branche de dérivation B relie un premier 31 et un deuxième 32 point de raccordement avec la boucle principale A. Le premier point de raccordement 31 est disposé en amont du premier dispositif de détente 7, entre le condenseur 5 et ledit premier dispositif de détente 7. Le deuxième point de raccordement 32 est quant à lui disposé en aval du premier évaporateur 11, entre ledit premier évaporateur 11 et le compresseur 3.

Par condenseur 5, premier 11 et deuxième 15 évaporateur, on entend par ici un échangeur de chaleur défini par sa fonction. Un condenseur aura alors comme fonction de réchauffer l'élément avec lequel il échange de l'énergie calorifique et un évaporateur aura comme fonction de refroidir l'élément avec lequel il échange de l'énergie calorifique.

Comme illustré sur la figure 1, les premier 100, deuxième 200 et troisième 300 éléments avec lesquels échangent respectivement le condenseur 5 et les premier 11 et deuxième 15 évaporateurs, peuvent être des flux d'air traversant lesdits échangeurs de chaleur. Cependant, selon le type d'échangeur de chaleur il n'est bien sûr pas exclu que les premier 100, deuxième 200 et troisième 300 éléments soient d'autres types, comme par exemple un fluide caloporteur ou un élément en contact direct avec l'évaporateur comme par exemple des batteries. Le condenseur 5 et les premier 11 et deuxième 15 évaporateurs peuvent ainsi par exemple être des échangeurs de chaleur à air lorsque les premier 100, deuxième 200 et troisième 300 éléments sont des flux d'air, des échangeurs de types échangeurs en plaque lorsqu'ils sont au contact direct des premier 100, deuxième 200 et troisième 300 éléments ou encore des échangeurs de chaleur bifluide lorsque les premier 100, deuxième 200 et troisième 300 éléments sont des fluides caloporteur circulant dans un circuit de gestion thermique annexe.

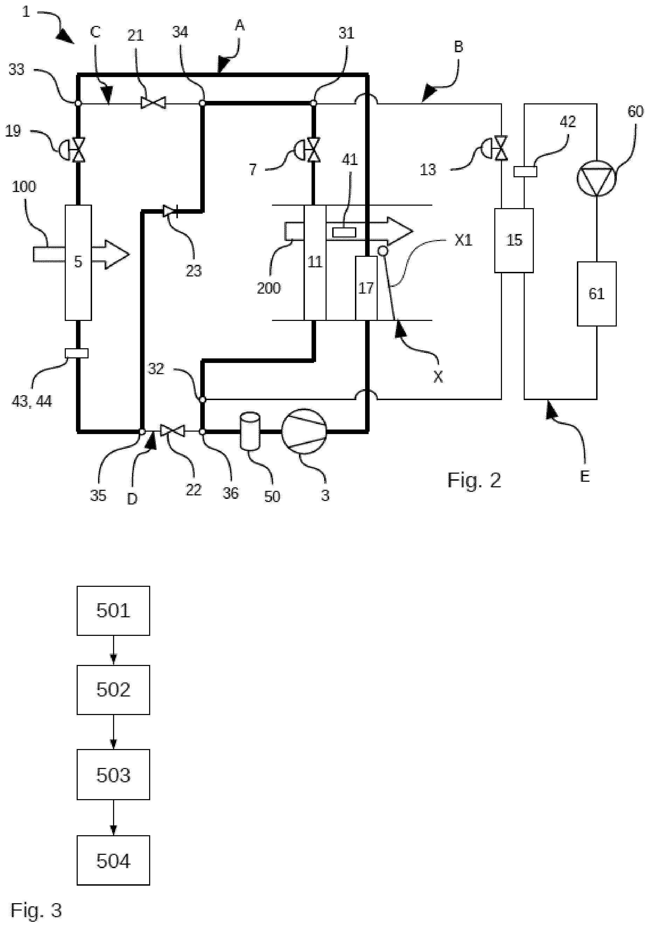

La figure 2 montre quant à elle un exemple de dispositif de régulation thermique 1 plus complexe. Dans cet exemple, le dispositif de gestion thermique 1 est inversible, c'est à dire qu'il peut aussi bien refroidir que chauffer ici un flux d'air interne à destination de l'habitacle.

Le dispositif de gestion thermique 1 comporte ici un circuit de fluide réfrigérant comportant une boucle principale A (représentée en traits épais sur la figure 2) comprenant tout d'abord, dans le sens de circulation du fluide réfrigérant un compresseur 3 et un premier échangeur de chaleur 17, configuré pour échanger de l'énergie calorifique avec le deuxième élément 200, ici un flux d'air interne à destination de l'habitacle. Ce premier échangeur de chaleur 17 peut notamment être disposé au sein d'un dispositif de chauffage, ventilation et climatisation X également appelé HVAC pour l'acronyme de « Heating, Ventilation and Air Conditioning » en anglais. Ce premier échangeur de chaleur 17 joue notamment un rôle de condenseur interne, c'est-à-dire qu'il est configuré pour céder de l'énergie calorifique au deuxième élément 200, ici le flux d'air interne, par exemple dans un mode pompe à chaleur. Lorsque le chauffage du flux d'air interne n'est pas nécessaire, un volet X1 peut venir bloquer le flux d'air interne et l'empêcher de traverse le premier échangeur de chaleur 17.

La boucle principale A comporte ensuite un troisième dispositif de détente 19 disposé en amont d'un deuxième échangeur de chaleur 5 configuré pour échanger de l'énergie calorifique avec le premier élément 100, ici un flux d'air externe. Ce troisième dispositif de détente 19 peut notamment, lorsqu'il est ouvert complètement, laisser passer le fluide réfrigérant sans perte de pression. Le deuxième échangeur de chaleur 5 peut notamment être un évapo-condenseur, c'est dire qu'il est configuré pour jouer un rôle d'évaporateur externe, c'est-à-dire absorber de l'énergie calorifique au premier élément 100, par exemple dans un mode pompe à chaleur. Le deuxième échangeur de chaleur 5 peut également être configuré pour jouer un rôle de condenseur externe, c'est-à-dire qu'il est configuré pour céder de l'énergie calorifique au premier élément 100, par exemple dans un mode de refroidissement.

La boucle principale A comporte ensuite un premier dispositif de détente 7 disposé en amont d'un troisième échangeur de chaleur 11, configuré pour échanger de l'énergie calorifique avec le deuxième élément 200, ici un flux d'air interne à destination de l'habitacle. Le premier dispositif de détente 7 peut notamment comporter une fonction d'arrêt afin de bloquer le fluide réfrigérant. Ce troisième échangeur de chaleur 11 peut notamment être disposé au sein du dispositif de chauffage, ventilation et climatisation X en amont du premier échangeur de chaleur 17 dans le sens de circulation du flux d'air interne. Ce troisième échangeur de chaleur 11 peut notamment être configuré pour jouer un rôle d'évaporateur interne, c'est-à-dire absorber de l'énergie calorifique au deuxième élément 200, par exemple dans un mode de refroidissement.

La boucle principale A peut également comporter un dispositif de séparation de phase 50 disposé en amont du compresseur 3.

Comme pour celui de la figure 1, le circuit de fluide réfrigérant comporte également une branche de dérivation B disposée en parallèle du premier dispositif de détente 7 et du troisième échangeur de chaleur 11. Cette branche de dérivation B comporte un deuxième dispositif de détente 13 et un quatrième échangeur de chaleur 15 disposé en aval du deuxième dispositif de détente 13. Le quatrième échangeur de chaleur 15 est plus particulièrement configuré pour échanger de l'énergie calorifique avec un troisième élément 300.

Plus précisément, la branche de dérivation B relie un premier 31 et un deuxième 32 point de raccordement avec la boucle principale A. Le premier point de raccordement 31 est disposé en amont du premier dispositif de détente 7, entre le deuxième échangeur de chaleur 5 et ledit premier dispositif de détente 7. Le deuxième point de raccordement 32 est quant à lui disposé en aval du troisième échangeur de chaleur 11, entre ledit troisième échangeur de chaleur 11 et le compresseur 3.

Le deuxième dispositif de détente 7 peut notamment comporter une fonction d'arrêt afin de bloquer le fluide réfrigérant. Ce quatrième échangeur de chaleur 15 peut notamment être configuré pour jouer un rôle d'évaporateur, c'est-à-dire absorber de l'énergie calorifique au troisième élément 300, par exemple dans un mode de refroidissement. Le quatrième échangeur de chaleur 15 peut ainsi notamment jouer le rôle du deuxième évaporateur 15.

Dans l'exemple illustré à la figure 2, le dispositif de gestion thermique 1 comporte un circuit annexe E dans lequel circule un fluide caloporteur jouant le rôle de troisième élément 300. Le quatrième échangeur de chaleur 15 est quant à lui un échangeur de chaleur bifluide configuré pour permettre les échanges d'énergie calorifique entre le fluide réfrigérant et le troisième élément 300.

Le circuit annexe E peut notamment comporter dans le sens de circulation du fluide caloporteur, une pompe 60, un échangeur de chaleur 61 et le quatrième échangeur de chaleur 15. L'échangeur de chaleur 61 peut plus particulièrement être au contact avec des éléments électroniques et/ou électriques comme par exemple des batteries afin de gérer leur température de fonctionnement.

Toujours comme le montre la figure 2, le circuit de fluide réfrigérant comporte une première conduite de contournement C permettant de contourner le troisième dispositif de détente 19 et le deuxième échangeur de chaleur 5. Cette première conduite de contournement C relie plus particulièrement un troisième 33 et un quatrième 34 point de raccordement. Le troisième point de raccordement 33 est disposé en amont du troisième dispositif de détente 19, entre le premier échangeur de chaleur 17 et ledit troisième dispositif de détente 19. Le quatrième point de raccordement 33 est quant à lui disposé en amont du premier dispositif de détente 7, entre le deuxième échangeur de chaleur 5 et ledit premier dispositif de détente 7, plus précisément entre le deuxième échangeur de chaleur 5 et le premier point de raccordement 31.

La première conduite de contournement C comporte notamment une vanne d'arrêt 21 afin de contrôler le passage ou non du fluide réfrigérant en son sein. La boucle principale A peut comporter également un clapet anti-retour 23 en amont du quatrième point de raccordement 34 afin d'éviter les remontées de fluide réfrigérant vers le deuxième échangeur de chaleur 5 en provenance de la première conduite de contournement C.

Le circuit de fluide réfrigérant comporte en outre une deuxième conduite de contournement D permettant de contourner le premier dispositif de détente 7, le troisième échangeur de chaleur 11 ainsi que la branche de dérivation B. Cette deuxième conduite de contournement D relie plus particulièrement un cinquième 35 et un sixième 36 point de raccordement. Le cinquième point de raccordement 35 est disposé en aval du deuxième échangeur de chaleur 5, entre ledit deuxième échangeur de chaleur 5 et le premier dispositif de détente 7, plus précisément entre ledit deuxième échangeur de chaleur 5 et le quatrième point de raccordement 34. Le sixième point de raccordement 36 est quant à lui disposé en aval du deuxième point de raccordement 32, entre le deuxième point de raccordement 32 et le compresseur 3.

La deuxième conduite de contournement D comporte également une vanne d'arrêt 22 afin de contrôler le passage ou non du fluide réfrigérant en son sein.

Cette architecture illustrée à la figure 2 permet différents modes de fonctionnement du dispositif de gestion thermique 1 comme par exemple :

- un mode de refroidissement dans lequel le premier échangeur de chaleur 17 n'est pas utilisé et dans lequel le deuxième échangeur de chaleur 5 joue le rôle de condenseur, le troisième échangeur de chaleur 11 celui de premier évaporateur et le quatrième échangeur de chaleur 15 celui de deuxième évaporateur, en parallèle du premier évaporateur,
- un mode de chauffage dans lequel le premier échangeur de chaleur 17 joue le rôle de condenseur, le deuxième échangeur de chaleur 5 celui de premier évaporateur et le quatrième échangeur de chaleur 15 celui de deuxième évaporateur, en parallèle du premier évaporateur, (le troisième échangeur de chaleur n'étant pas utilisé), ou encore
- un mode de déshumidification dans lequel le premier échangeur de chaleur 17 joue le rôle de condenseur, le deuxième échangeur de chaleur 5 celui de premier évaporateur et le troisième échangeur de chaleur 11 celui de deuxième évaporateur, en parallèle du premier évaporateur, le quatrième échangeur de chaleur 15 n'étant pas utilisé ou alors jouant un rôle de troisième évaporateur en parallèle des premier et deuxième évaporateurs.

D'autre architectures et d'autres modes de fonctionnement peuvent tout à fait être envisageable sans sortir du cadre de l'invention du moment où le dispositif de gestion thermique 1 comporte un circuit de fluide réfrigérant dans lequel est destiné à circuler un fluide réfrigérant, ledit circuit de fluide réfrigérant comportant :

- une boucle principale comportant, dans le sens de circulation du fluide réfrigérant, un compresseur, un condenseur configuré pour échanger de l'énergie calorifique avec un premier élément, un premier dispositif de détente et un premier évaporateur configuré pour échanger de l'énergie calorifique avec un deuxième élément,

- une branche de dérivation disposée en parallèle du premier dispositif de détente et du premier évaporateur ladite branche de dérivation comportant un deuxième dispositif de détente et un deuxième évaporateur disposé en aval du deuxième dispositif de détente et configuré pour échanger de l'énergie calorifique avec un troisième élément.

Dans le reste de la présente description, par soucis de clarté, nous avons pris l'exemple d'un mode de refroidissement dans lequel le condenseur est le deuxième échangeur de chaleur 5, le premier évaporateur est le troisième échangeur de chaleur 11 et le deuxième évaporateur est le quatrième échangeur de chaleur 15.

La présente invention concerne ainsi un procédé de gestion du dispositif de gestion thermique 1.

Dans la présente description nous allons utiliser des références afin de déterminer certains paramètres :

T11-sp correspond à une valeur consigne de la température du deuxième élément 200 en sortie du premier évaporateur 11,

T11-m correspond à la valeur mesurée ou déterminée de la température du deuxième élément 200 en sortie du premier évaporateur 11,

T15-sp1 ; T15-sp2 et T15-sp3 correspondent à une valeur consigne de la température du troisième élément 300 en sortie du deuxième évaporateur 15,

T15-m correspond à la valeur mesurée ou déterminée de la température du troisième élément 300 en sortie du deuxième évaporateur 15,

SBC-sp correspond à une valeur consigne de sous-refroidissement du fluide réfrigérant en sortie du premier évaporateur 11,

SBC-calc correspond la valeur calculée du sous-refroidissement du fluide réfrigérant en sortie du premier évaporateur 11.

Tant que la capacité de refroidissement maximale du dispositif de gestion thermique 1 est supérieure ou égale à la somme de la puissance de refroidissement requise pour chaque évaporateur, chaque évaporateur est en mesure de fournir la puissance de refroidissement requise.

Une requête de priorité peut alors être émise afin de définir lequel des deux évaporateurs est prioritaire dans la répartition de la puissance de refroidissement disponible. Ainsi, lorsque la capacité de refroidissement maximale du dispositif de gestion thermique est inférieure à la somme de la puissance de refroidissement requise pour chaque évaporateur, le procédé va permettre à l'évaporateur désigné comme prioritaire de fournir la puissance de refroidissement requise à cet évaporateur. L'autre évaporateur fournira seulement la différence entre la puissance totale disponible et la puissance attribuée à l'évaporateur prioritaire, cette quantité étant inférieure à la puissance requise.

Priorité du refroidissement via le premier évaporateur 11 :

Lorsque :

- au moins le premier évaporateur 11 est utilisé de sorte que la température du deuxième élément 200 en sortie du premier évaporateur 11 atteigne une température consigne T11-sp,
- une requête d'utilisation du deuxième évaporateur 15 est émise de sorte que le troisième élément 300 atteigne une première température consigne T15-spl,
- la puissance de refroidissement requise pour le fonctionnement simultané des premier 11 et deuxième 15 évaporateurs est supérieure à la capacité de refroidissement maximale du dispositif de gestion thermique 1, et
- le dispositif de gestion thermique 1 reçoit une requête de priorité de refroidissement via le premier évaporateur 11,

le procédé de gestion comporte les étapes illustrées sur l'organigramme de la figure 3.

Une première étape 501 est une étape d'augmentation de la vitesse de rotation du compresseur 3 jusqu'à sa vitesse maximale. Cette vitesse maximale du compresseur 3 peut notamment être définie par des contraintes de résistance propre au compresseur 3 ou bien par des limites imposées telles qu'une limitation de la consommation énergétique ou une puissance disponible limitée. Par exemple, selon les modèles de compresseur 3, la vitesse maximale peut être de 5000 tr/min (tours par minute).

Une deuxième étape 502 est une étape de détermination d'une température consigne modifiée T15-sp3 du troisième élément 300 supérieure à la première température consigne T15-spl de sorte que la température du deuxième élément 200 en sortie du premier évaporateur 11 tende vers sa température consigne T11-sp. La température du deuxième élément 200 en sortie du premier évaporateur 11 peut par exemple être mesurée par un premier capteur de température 41 disposé en sortie du premier évaporateur 11 auprès du deuxième élément 200.

Une troisième étape 503 est une étape d'ajustement du diamètre d'ouverture du deuxième dispositif de détente 13 de sorte que la température du troisième élément 300 en sortie du deuxième évaporateur 15 atteigne la valeur température consigne modifiée T15-sp3, jusqu'à ce que la température du deuxième élément 200 en sortie du premier évaporateur 11 atteigne la température consigne T11-sp. La température du troisième élément 300 en sortie du deuxième évaporateur 15 peut par exemple être mesurée par un deuxième capteur de température 42 disposé en sortie du deuxième évaporateur 15 auprès du troisième élément 300.

L'augmentation de la vitesse de rotation du compresseur 3 jusqu'à sa vitesse maximale permet au dispositif de gestion thermique 1 d'atteindre sa capacité de refroidissement maximale. Le fait de modifier la température consigne T15-sp1 du troisième élément 300 en sortie du deuxième évaporateur 15 en une valeur température consigne modifiée T15-sp3, permet de prioriser le refroidissement du deuxième élément 200, par exemple un flux d'air interne. Ainsi, plus de puissance de refroidissement est allouée au premier évaporateur 11 pour le refroidissement du deuxième élément 200 qu'au deuxième évaporateur 15 pour le refroidissement du troisième élément 300.

Selon un premier exemple dans lequel les conditions sont les suivantes :

- la température ambiante est de 40°C,
- le dispositif de gestion thermique 1 a une capacité de refroidissement maximale de 5600 W,
- le compresseur 3 a une vitesse maximale de 5000 tr/min,
- seul le premier évaporateur 11 est utilisé pour refroidir le deuxième élément 200 à une température consigne T11-sp de 11°C,
- la vitesse du compresseur 3 de l'ordre de 2400 tr/min, et
- la puissance de refroidissement de 3000 W allouée au refroidissement du deuxième élément 200.

Si un refroidissement du troisième élément 300 via le deuxième évaporateur 15 est demandé à une puissance de 3600 W pour atteindre une température consigne T15-sp1 de 20°C, alors la capacité de refroidissement du dispositif de gestion thermique 1 est dépassée de 1000W.

Dans le même temps, si une requête de priorité de refroidissement via le premier évaporateur 11 est émise alors la vitesse du compresseur 3 est augmentée jusqu'à 5000 tr/min. La température consigne T15-sp1 est augmentée à une température consigne T15-sp3 de sorte que la puissance allouée au refroidissement du troisième élément 300 ne soit que de 2600W. L'ouverture du deuxième dispositif de détente 13 est alors ajustée de sorte que la température T15-m du troisième élément 300 en sortie du deuxième évaporateur 15 atteigne la température consigne modifiée T15-sp3 jusqu'à ce que la température T11-m du deuxième élément 200 en sortie du premier évaporateur 11 atteigne sa température consigne T11-sp de 11°C.

Le procédé de gestion peut également comporter une étape 504 d'ajustement du diamètre d'ouverture du premier dispositif de détente 7 de sorte que le sous-refroidissement du fluide réfrigérant en sortie du condenseur 5 atteigne une valeur consigne de sous-refroidissement SBC-sp. Le sous-refroidissement SBC-calc étant calculé selon la formule suivante :

$$SBC\text{-}calc = TreCO - Tsat(PreCO)$$

avec TreCO la température du fluide réfrigérant en sortie du condenseur 5 et Tsat(PreCO) la température de saturation du fluide réfrigérant à la pression du fluide réfrigérant en sortie du condenseur 5. La température TreCO du fluide réfrigérant en sortie du condenseur 5 peut par exemple être mesurée par un troisième capteur de température 43 disposé dans le circuit de fluide réfrigérant à la sortie du condenseur 5. La pression PreCO du fluide réfrigérant en sortie du condenseur 5 peut par exemple être mesurée par un capteur de pression 44 disposé dans le circuit de fluide réfrigérant à la sortie du condenseur 5. Le troisième capteur de température 43 et le capteur de pression 44 peuvent être regroupés au sein d'un même capteur pression-température.

La valeur consigne de sous-refroidissement SBC-sp peut quant à elle être déterminée selon la formule suivante :

$$SBC\text{-}sp = (((mr / \ln(Pd + \beta)) / k) - 1) / \alpha$$

avec mr le débit du fluide réfrigérant, Pd la pression de fluide réfrigérant en sortie du compresseur 3, $\alpha = 4{,}525^{-2}$, $\beta = 1{,}7308$ et

k = 14,089 × d², 

d étant le diamètre d'ouverture théorique du premier dispositif de détente 7 en millimètre pour un coefficient de performance optimale. Ce diamètre d étant notamment obtenu à partir de tables d'expérimentations selon différentes conditions de température.

Priorité du refroidissement via le deuxième évaporateur 15 :

Lorsque :

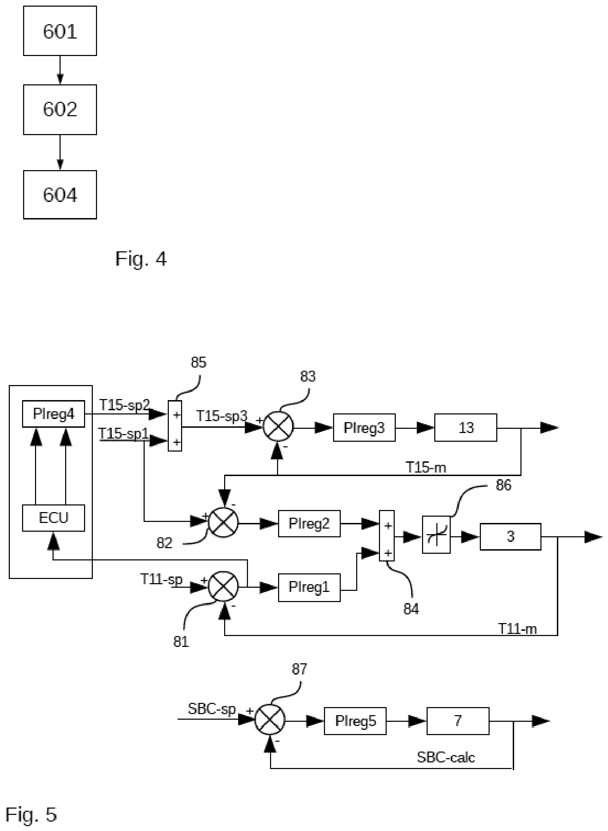

- au moins le premier évaporateur 11 est utilisé de sorte que la température du deuxième élément 200 en sortie du premier évaporateur 11 atteigne une température consigne T11-sp,
- qu'une requête d'utilisation du deuxième évaporateur 15 est émise de sorte que le troisième élément 300 atteigne une première température consigne T15-spl,
- que la puissance de refroidissement requise est supérieure à la capacité de refroidissement maximale du dispositif de gestion thermique 1, et
- que le dispositif de gestion thermique 1 reçoit une requête de priorité de refroidissement via le deuxième évaporateur 15,

le procédé de gestion comporte les étapes illustrées sur l'organigramme de la figure 4.

Comme précédemment, une première étape 601 est une étape d'augmentation de la vitesse de rotation du compresseur 3 jusqu'à sa vitesse maximale. Cette vitesse maximale du compresseur 3 peut notamment être définie par des contraintes de résistance propre au compresseur 3 ou bien par des limites imposées telles qu'une limitation de la consommation énergétique ou une puissance disponible limitée. Par exemple, selon les modèles de compresseur 3, la vitesse maximale peut être de 5000 tr/min.

Une deuxième étape 602 est une étape d'ajustement du diamètre d'ouverture du deuxième dispositif de détente 13 jusqu'à ce que la température du troisième élément 300 en sortie du deuxième évaporateur 15 atteigne la première température consigne T15-spl. Contrairement à précédemment, la température consigne T15-sp1 n'est pas modifiée.

L'augmentation de la vitesse de rotation du compresseur 3 jusqu'à sa vitesse maximale permet au dispositif de gestion thermique 1 d'atteindre sa capacité de refroidissement maximale. Le fait d'ajuster directement l'ouverture du deuxième dispositif de détente 13 pour que la température du troisième élément 300 atteigne sa température consigne T15-sp1 en sortie du troisième évaporateur 15 permet de prioriser le refroidissement du troisième élément 300, par exemple pour refroidir des batteries. Ainsi, plus de puissance de refroidissement est allouée au deuxième évaporateur 15 pour le refroidissement du troisième élément 300 qu'au premier évaporateur 11 pour le refroidissement du deuxième élément 200.

Selon un deuxième exemple dans lequel les conditions sont les suivantes:

- la température ambiante est de 40°C,
- le dispositif de gestion thermique 1 a une capacité de refroidissement maximale de 5600 W,
- le compresseur 3 a une vitesse maximale de 5000 tr/min,
- le premier évaporateur 11 est utilisé pour refroidir le deuxième élément 200 à une température consigne T11-sp de 11°C, avec une puissance allouée de 2000 W,
- le deuxième évaporateur 15 est utilisé pour refroidir le troisième élément 300 à une température consigne T15-sp1 de 24°C, avec une puissance allouée de 1000W, et
- la vitesse du compresseur 3 de l'ordre de 2400 tr/min.

Si une augmentation du refroidissement du troisième élément 300 via le deuxième évaporateur 15 est demandée à une puissance de 3600 W pour atteindre une température consigne T15-sp1 de 20°C, alors la capacité de refroidissement du dispositif de gestion thermique 1 est dépassée de 1000W.

Dans le même temps, si une requête de priorité de refroidissement via le deuxième évaporateur 15 est émise alors la vitesse du compresseur 3 est augmentée jusqu'à 5000 tr/min. L'ouverture du deuxième dispositif de détente 13 est alors ajustée jusqu'à ce que la température T15-m du troisième élément 300 en sortie du deuxième évaporateur 15 atteigne la température consigne T15-sp 1.

Également comme précédemment, le procédé de gestion peut également comporter une étape 604 d'ajustement du diamètre d'ouverture du premier dispositif de détente 7 de sorte que le sous-refroidissement du fluide réfrigérant en sortie du condenseur 5 atteigne une valeur consigne de sous-refroidissement SBC-sp. Le sous-refroidissement SBC-calc étant calculé selon la formule suivante :

$$SBC\text{-}calc = TreCO - Tsat(PreCO)$$

avec TreCO la température du fluide réfrigérant en sortie du condenseur 5 et Tsat(PreCO) la température de saturation du fluide réfrigérant à la pression du fluide réfrigérant en sortie du condenseur 5. La température TreCO du fluide réfrigérant en sortie du condenseur 5 peut par exemple être mesurée par un troisième capteur de température 43 disposé dans le circuit de fluide réfrigérant à la sortie du condenseur 5. La pression PreCO du fluide réfrigérant en sortie du condenseur 5 peut par exemple être mesurée par un capteur de pression 44 disposé dans le circuit de fluide réfrigérant à la sortie du condenseur 5. Le troisième capteur de température 43 et le capteur de pression 44 peuvent être regroupés au sein d'un même capteur pression-température.

La valeur consigne de sous-refroidissement SBC-sp peut quant à elle être déterminée selon la formule suivante :

$$SBC\text{-}sp = (((mr / \ln(Pd + \beta)) / k) - 1) / \alpha$$

avec mr le débit du fluide réfrigérant, Pd la pression de fluide réfrigérant en sortie du compresseur 3, $\alpha = 4{,}525^{-2}$, $\beta = 1{,}7308$ et
$k = 14{,}089 \times d^2$,
d étant le diamètre d'ouverture théorique du premier dispositif de détente 7 en millimètre pour un coefficient de performance optimale. Ce diamètre d étant notamment obtenu à partir de tables d'expérimentations selon différentes conditions de température.

La figure 5 montre un schéma fonctionnel partiel du dispositif de gestion thermique 1 pour la mise en oeuvre du procédé de gestion décrit ci-dessus.

Le dispositif de gestion thermique 1 peut ainsi comporter, un premier régulateur proportionnel-intégral PIreg1. Ce premier régulateur proportionnel-intégral PIreg1 est notamment configuré pour réguler la vitesse de rotation du compresseur 3. Cette régulation est réalisée en fonction de la différence entre la température T11-m du deuxième élément 200 en sortie du premier évaporateur 11, par exemple mesurée par le premier capteur de température 41, et une température consigne T11-sp du deuxième élément 200 en sortie du premier évaporateur 11.

La différence entre la température T11-m et la température consigne T11-sp peut notamment être réalisée par un premier comparateur 81 disposé en amont du premier régulateur proportionnel-intégral PIreg1.

Le dispositif de gestion thermique 1 peut également comporter un deuxième régulateur proportionnel-intégral PIreg2. Ce deuxième régulateur proportionnel-intégral PIreg2 est également configuré pour réguler la vitesse de rotation du compresseur 3 en fonction de la différence entre la température T15-m du troisième élément 300 en sortie du deuxième évaporateur 15 et une première température consigne T15-sp1 du troisième élément 300 en sortie du deuxième évaporateur 15.

La différence entre la température T15-m et la température consigne T15-sp1 peut notamment être réalisée par un deuxième comparateur 82 disposé en amont du deuxième régulateur proportionnel-intégral PIreg2.

Le dispositif de gestion thermique 1 peut également comporter un premier additionneur 85 disposé en amont du compresseur 3 et configuré pour additionné les signaux de vitesse de rotation en sortie des premier PIreg1 et deuxième PIreg2 régulateurs proportionnel-intégral. La vitesse du compresseur 3 est ainsi gérée à la fois en fonction de l'utilisation du premier évaporateur 11 et du deuxième évaporateur 15 et de leurs températures consignes T11-sp et T15-sp1.

Le dispositif de gestion thermique 1 peut en outre comportes un limiteur 86 disposé entre le premier additionneur 85 et le compresseur 3 afin de limiter le signal de commande arrivant au compresseur 3 et ainsi éviter que ce dernier de dépasse sa vitesse maximale préconisée.

Le dispositif de gestion thermique 1 peut également comporter un troisième régulateur proportionnel-intégral PIreg3. Ce troisième régulateur proportionnel-intégral PIreg3 est notamment configuré pour ajuster le diamètre d'ouverture du deuxième dispositif de détente 13 en fonction de la différence entre la température T15-m du troisième élément 300 en sortie du deuxième évaporateur 15 et une température consigne T15-sp3 du troisième élément 300 en sortie du deuxième évaporateur 15.

La différence entre la température T15-m et la température consigne T15-sp3 peut notamment être réalisée par un troisième comparateur 83 disposé en amont du troisième régulateur proportionnel-intégral PIreg3.

Le dispositif de gestion thermique 1 peut également comporter une unité de commande électronique ECU configurée pour déterminer une deuxième température consigne T15-sp2 du troisième élément 300 en sortie du deuxième évaporateur 15 selon la différence entre la température T11-m du deuxième élément 200 en sortie du premier évaporateur 11 et la température consigne T11-sp du deuxième élément 200 sortie du premier évaporateur 11. Pour cela, l'unité de commande électronique ECU peut recevoir les signaux issus du deuxième comparateur 82.

De plus, le dispositif de gestion thermique 1 peut comporter un deuxième additionneur 85 configuré pour additionner la première T15-spl et la deuxième T5-sp2 température consigne du troisième élément 300 en sortie du deuxième évaporateur 15 afin de déterminer la température consigne T15-sp3 pour le troisième régulateur proportionnel-intégral PIreg3.

L'unité de commande électronique ECU peut ainsi en faisant varier la deuxième température consigne T15-sp2, modifier la température consigne T15-sp3.

Dans le cas où une requête de priorité de refroidissement via le premier évaporateur 11 est émise, l'unité de commande électronique ECU applique une deuxième température consigne T15-sp2 afin de faire augmenter la température consigne T15-sp3. En effet, grâce au deuxième additionneur 85, T15-sp3 = T15-spl + T15-sp2.

Dans le cas où une requête de priorité de refroidissement via le deuxième évaporateur 15 est émise, l'unité de commande électronique ECU n'applique pas une deuxième température consigne T15-sp2 et ainsi en sortie du deuxième additionneur 85 T15-sp3 = T15-spl.

La requête de priorité de refroidissement via le premier évaporateur 11 et la requête de priorité de refroidissement via le deuxième évaporateur 15 sont des requêtes qui sont notamment définies dans l'unité de commande électronique ECU. Ces requêtes de priorité dépendent des conditions d'utilisation et des modes d'utilisation du véhicule automobile. Ces requêtes de priorité peuvent également varier en fonction des préconisations des constructeurs automobiles.

Comme le montre toujours la figure 5, le dispositif de gestion thermique 1 peut en outre comporter un quatrième régulateur proportionnel-intégral PIreg4 configuré pour réguler la deuxième température consigne T15-sp2 du troisième élément 300 en sortie du deuxième évaporateur 15 en fonction d'une consigne déterminée par l'unité de commande électronique ECU. Cette consigne est fonction de la requête de priorité.

Si l'unité de commande électronique ECU reçoit une requête de priorité de refroidissement via le deuxième évaporateur 15 alors elle transmet une consigne d'erreur au quatrième régulateur proportionnel-intégral PIreg4 de sorte que la deuxième température consigne T15-sp2 soit nulle.

Si l'unité de commande électronique ECU reçoit une requête de priorité de refroidissement via le premier évaporateur 11 alors elle transmet une consigne de régulation au quatrième régulateur proportionnel-intégral PIreg4 en fonction de la différence entre la température T11-m du deuxième élément 200 en sortie du premier évaporateur 11 et de la température consigne T11-sp du deuxième élément 200 sortie du premier évaporateur 11 de sorte que la deuxième température consigne T15-sp2 soit non nulle.

Comme le montre toujours la figure 5, le dispositif de gestion thermique 1 peut comporter un cinquième régulateur proportionnel-intégral PIreg5. Ce cinquième régulateur proportionnel-intégral PIreg5 est notamment configuré pour ajuster le diamètre d'ouverture du premier dispositif de détente 7 en fonction de la différence entre le sous-refroidissement calculé SBC-calc du fluide réfrigérant en sortie du condenseur 5 et la valeur consigne SBC-sp du sous-refroidissement du fluide réfrigérant en sortie du condenseur 5.

Ainsi, on voit bien que le procédé de gestion thermique ainsi que le dispositif de gestion thermique associé permettent une bonne gestion de la priorité dans l'utilisation du premier 11 ou du deuxième 15 évaporateur lorsque la capacité maximale de refroidissement du dispositif de gestion thermique 1 n'est pas suffisante pour qu'à la fois le deuxième élément 200 et le troisième élément 300 atteignent leur température consigne respective.

## Revendications

1. Procédé de gestion d'un dispositif de gestion thermique (1) pour véhicule automobile comportant un circuit de fluide réfrigérant dans lequel est destiné à circuler un fluide réfrigérant, ledit circuit de fluide réfrigérant comportant :

   - une boucle principale (A) comportant, dans le sens de circulation du fluide réfrigérant, un compresseur (3), un condenseur (5) configuré pour échanger de l'énergie calorifique avec un premier élément (100), un premier dispositif de détente (7) et un premier évaporateur (11) configuré pour échanger de l'énergie calorifique avec un deuxième élément (200),
   - une branche de dérivation (B) disposée en parallèle du premier dispositif de détente (7) et du premier évaporateur (11), ladite branche de dérivation (B) comportant un deuxième dispositif de détente (13) et un deuxième évaporateur (15) disposé en aval du deuxième dispositif de détente (13) et configuré pour échanger de l'énergie calorifique avec un troisième élément (300),
   lorsqu'au moins le premier évaporateur (11) est utilisé de sorte que la température du deuxième élément (200) en sortie du premier évaporateur (11) atteigne une température consigne (T11-sp),
   qu'une requête d'utilisation du deuxième évaporateur (15) est émise de sorte que le troisième élément (300) atteigne une première température consigne (T15-sp1),
   que la puissance de refroidissement requise pour le fonctionnement simultané des premier (11) et deuxième (15) évaporateur est supérieure à la capacité de refroidissement maximale du dispositif de gestion thermique

(1), et

que le dispositif de gestion thermique (1) reçoit une requête de priorité de refroidissement via le premier évaporateur (11),

le procédé de gestion comporte les étapes suivantes :

- augmentation de la vitesse de rotation du compresseur (3) jusqu'à sa vitesse maximale,
- détermination d'une température consigne modifiée (T15-sp3) du troisième élément (300) supérieure à la première température consigne (T15-spl) de sorte que la température du deuxième élément (200) en sortie du premier évaporateur (11) tende vers sa température consigne (T11-sp),
- ajustement du diamètre d'ouverture du deuxième dispositif de détente (13) de sorte que la température du troisième élément (300) en sortie du deuxième évaporateur (15) atteigne une température consigne modifiée (T15-sp3), jusqu'à ce que la température du deuxième élément (200) en sortie du premier évaporateur (11) atteigne la température consigne (T11-sp).

2. Procédé de gestion d'un dispositif de gestion thermique (1) selon la revendication précédente, **caractérisé en ce que**

lorsqu'au moins le premier évaporateur (11) est utilisé de sorte que la température du deuxième élément (200) en sortie du premier évaporateur (11) atteigne une température consigne (T11-sp),

qu'une requête d'utilisation du deuxième évaporateur (15) est émise de sorte que le troisième élément (300) atteigne une première température consigne (T15-sp1),

que la puissance de refroidissement requise est supérieure à la capacité de refroidissement maximale du dispositif de gestion thermique (1), et

que le dispositif de gestion thermique (1) reçoit une requête de priorité de refroidissement via le deuxième évaporateur (15),

le procédé de gestion comporte les étapes suivantes :

- augmentation de la vitesse de rotation du compresseur (3) jusqu'à sa vitesse maximale,
- ajustement du diamètre d'ouverture du deuxième dispositif de détente (13) jusqu'à ce que la température du troisième élément (300) en sortie du deuxième évaporateur (15) atteigne la première température consigne (T15-sp1).

3. Procédé de gestion d'un dispositif de gestion thermique (1) selon l'une quelconque des revendications précédentes, **caractérisé en ce que** le procédé de gestion comporte une étape d'ajustement du diamètre d'ouverture du premier dispositif de détente (7) de sorte que le sous-refroidissement du fluide réfrigérant en sortie du condenseur (5) atteigne une valeur consigne de sous-refroidissement (SBC-sp), le sous-refroidissement étant calculé selon la formule suivante :

$$SBC\text{-}calc = TreCO - Tsat(PreCO)$$

avec SBC-calc le sous-refroidissement calculé, TreCO la température du fluide réfrigérant en sortie du condenseur (5) et Tsat(PreCO) la température de saturation du fluide réfrigérant à la pression du fluide réfrigérant en sortie du condenseur (5).

4. Procédé de gestion d'un dispositif de gestion thermique (1) selon la revendication précédente, **caractérisé en ce que** la valeur consigne de sous-refroidissement (SBC-sp) est déterminée selon la formule suivante :

$$SBC\text{-}sp = (((mr / \ln(Pd + \beta)) / k) - 1) / \alpha$$

avec mr le débit du fluide réfrigérant, Pd la pression de fluide réfrigérant en sortie du compresseur (3), $\alpha = 4,525^{-2}$, $\beta = 1,7308$ et $k = 14,089 \times d^2$, d étant le diamètre d'ouverture théorique du premier dispositif de détente (7) en millimètre pour un coefficient de performance optimale.

5. Dispositif de gestion thermique (1) pour véhicule automobile comportant un circuit de fluide réfrigérant dans lequel est destiné à circuler un fluide réfrigérant, ledit circuit de fluide réfrigérant comportant :

- une boucle principale (A) comportant, dans le sens de circulation du fluide réfrigérant, un compresseur (3),

un condenseur (5) configuré pour échanger de l'énergie calorifique avec un premier élément (100), un premier dispositif de détente (7) et un premier évaporateur (11) configuré pour échanger de l'énergie calorifique avec un deuxième élément (200),

- une branche de dérivation (B) disposée en parallèle du premier dispositif de détente (7) et du premier évaporateur (13), ladite branche de dérivation (B) comportant un deuxième dispositif de détente (13) et un deuxième évaporateur (15) disposé en aval du premier deuxième dispositif de détente (13) et configuré pour échanger de l'énergie calorifique avec un troisième élément (300), **caractérisé en ce que** le dispositif de gestion thermique (1) comporte en outre :

    - un premier régulateur proportionnel-intégral (PIreg1) configuré pour réguler la vitesse de rotation du compresseur (3) en fonction de la différence entre la température (T11-m) du deuxième élément (200) en sortie du premier évaporateur (11) et une température consigne (T11-sp) du deuxième élément (200) en sortie du premier évaporateur (11),

    - un deuxième régulateur proportionnel-intégral (PIreg2) configuré pour réguler la vitesse de rotation du compresseur (3) en fonction de la différence entre la température (T15-m) du troisième élément (300) en sortie du deuxième évaporateur (15) et une première température consigne (T15-spl) du troisième élément (300) en sortie du deuxième évaporateur (15),

    - un premier additionneur (85) disposé en amont du compresseur (3) et configuré pour additionné les signaux de vitesse de rotation en sortie des premier (PIreg1) et deuxième(PIreg2) régulateurs proportionnel-intégral,

    - un troisième régulateur proportionnel-intégral (PIreg3) configuré pour ajuster le diamètre d'ouverture du deuxième dispositif de détente (13) en fonction de la différence entre la température (T15-m) du troisième élément (300) en sortie du deuxième évaporateur (15) et une température consigne (T15-sp3) du troisième élément (300) en sortie du deuxième évaporateur (15),

    - une unité de commande électronique (ECU) configurée pour déterminer une deuxième température consigne (T15-sp2) du troisième élément (300) en sortie du deuxième évaporateur (15) selon la différence entre la température (T11-m) du deuxième élément (200) en sortie du premier évaporateur (11) et la température consigne (T11-sp) du deuxième élément (200) sortie du premier évaporateur (11),

    - un deuxième additionneur (85) configuré pour additionner la première (T15-sp1) et la deuxième (T5-sp2) température consigne du troisième élément (300) en sortie du deuxième évaporateur (15) afin de déterminer la température consigne (T15-sp3) pour le troisième régulateur proportionnel-intégral (PIreg3).

6. Dispositif de gestion thermique (1) selon la revendication précédente, **caractérisé en ce qu'**il comporte un quatrième régulateur proportionnel-intégral (PIreg4) configuré pour réguler la deuxième température consigne (T15-sp2) du troisième élément (300) en sortie du deuxième évaporateur (15) en fonction d'une consigne déterminée par l'unité de commande électronique (ECU).

7. Dispositif de gestion thermique (1) selon l'une quelconque des revendications 5 ou 6, **caractérisé en ce que** le dispositif de gestion thermique (1) comporte un cinquième régulateur proportionnel-intégral (PIreg5) configuré pour ajuster le diamètre d'ouverture du premier dispositif de détente (7) en fonction de la différence entre le sous-refroidissement calculé (SBC-calc) du fluide réfrigérant en sortie du condenseur (5) et la valeur consigne (SBC-sp) du sous-refroidissement du fluide réfrigérant en sortie du condenseur (5).

8. Dispositif de gestion thermique (1) selon l'une quelconque des revendications 5 à 7, **caractérisé en ce que** :

    - le condenseur (5) est un échangeur de chaleur disposé en face avant du véhicule automobile et que le premier élément (100) est un flux d'air externe,

    - le premier évaporateur (11) est un échangeur de chaleur disposé au sein d'un dispositif de chauffage, ventilation et air conditionné (X) et que le deuxième élément (200) est un flux d'air interne à destination de l'habitacle, et que

    - le deuxième évaporateur (15) est configuré pour refroidir des éléments électriques et/ou électroniques tels que des batteries.

9. Dispositif de gestion thermique (1) selon l'une quelconque des revendications 5 à 8, **caractérisé en ce qu'**il comporte un circuit annexe (E) dans lequel circule le troisième élément (300), le deuxième évaporateur (15) étant un échangeur de chaleur bifluide configuré pour permettre les échanges de chaleur entre le fluide réfrigérant et le troisième élément (300).

10. Dispositif de gestion thermique (1) selon l'une quelconque des revendications 5 à 9, **caractérisé en ce qu'**il comporte un limiteur (86) disposé entre le premier additionneur (85) et le compresseur (3).


**Patentansprüche**

1. Vorrichtung zur Verwaltung einer Wärmemanagementvorrichtung (1) für ein Kraftfahrzeug, die einen Kühlfluidkreis aufweist, in dem ein Kühlfluid strömen soll, wobei der Kühlfluidkreis Folgendes aufweist:

   - eine Hauptschleife (A), die in der Strömungsrichtung des Kühlfluids einen Kompressor (3), einen Kondensator (5), der dazu ausgebildet ist, Wärmeenergie mit einem ersten Element (100) auszutauschen, eine erste Expansionsvorrichtung (7) und einen ersten Verdampfer (11), der dazu ausgebildet ist, Wärmeenergie mit einem zweiten Element (200) auszutauschen, aufweist,
   - einen Bypasszweig (B), der parallel zur ersten Expansionsvorrichtung (7) und zum ersten Verdampfer (11) angeordnet ist, wobei der Bypasszweig (B) eine zweite Expansionsvorrichtung (13) und einen zweiten Verdampfer (15), der stromab der zweiten Expansionsvorrichtung (13) angeordnet ist und dazu ausgebildet ist, Wärmeenergie mit einem dritten Element (300) auszutauschen, aufweist,
   wenn wenigstens der erste Verdampfer (11) verwendet wird, so dass die Temperatur des zweiten Elements (200) am Ausgang des ersten Verdampfers (11) eine Solltemperatur (T11-sp) erreicht,
   wenn eine Anforderung zur Verwendung des zweiten Verdampfers (15) gesendet wird, so dass das dritte Element (300) eine erste Solltemperatur (T15-sp1) erreicht,
   wenn die Kühlleistung, die für den gleichzeitigen Betrieb des ersten (11) und zweiten (15) Verdampfers erforderlich ist, höher als die maximale Kühlkapazität der Wärmemanagementvorrichtung (1) ist, und
   wenn die Wärmemanagementvorrichtung (1) eine Anforderung zur Priorität der Kühlung über den ersten Verdampfer (11) empfängt,
   das Verwaltungsverfahren die folgenden Schritte aufweist:

   - Erhöhen der Drehzahl des Kompressors (3) bis zu seiner Höchstdrehzahl,
   - Bestimmen einer geänderten Solltemperatur (T15-sp3) des dritten Elements (300), die höher als die erste Solltemperatur (T15-sp1) ist, so dass die Temperatur des zweiten Elements (200) am Ausgang des ersten Verdampfers (11) zu seiner Solltemperatur (T11-sp) tendiert,
   - Anpassen des Öffnungsdurchmessers der zweiten Expansionsvorrichtung (13), so dass die Temperatur des dritten Elements (300) am Ausgang des zweiten Verdampfers (15) eine geänderte Solltemperatur (T15-sp3) erreicht, bis die Temperatur des zweiten Elements (200) am Ausgang des ersten Verdampfers (11) die Solltemperatur (T11-sp) erreicht.

2. Vorrichtung zur Verwaltung einer Wärmemanagementvorrichtung (1) nach dem vorhergehenden Anspruch, **dadurch gekennzeichnet, dass**

   wenn wenigstens der erste Verdampfer (11) verwendet wird, so dass die Temperatur des zweiten Elements (200) am Ausgang des ersten Verdampfers (11) eine Solltemperatur (T11-sp) erreicht,
   wenn eine Anforderung zur Verwendung des zweiten Verdampfers (15) gesendet wird, so dass das dritte Element (300) eine erste Solltemperatur (T15-sp1) erreicht,
   wenn die erforderliche Kühlleistung höher als die maximale Kühlkapazität der Wärmemanagementvorrichtung (1) ist, und
   wenn die Wärmemanagementvorrichtung (1) eine Anforderung zur Priorität der Kühlung über den zweiten Verdampfer (15) empfängt,
   das Verwaltungsverfahren die folgenden Schritte aufweist:

   - Erhöhen der Drehzahl des Kompressors (3) bis zu seiner Höchstdrehzahl,
   - Anpassen des Öffnungsdurchmessers der zweiten Expansionsvorrichtung (13), bis die Temperatur des dritten Elements (300) am Ausgang des zweiten Verdampfers (15) die erste Solltemperatur (T15-sp1) erreicht.

3. Vorrichtung zur Verwaltung einer Wärmemanagementvorrichtung (1) nach einem der vorhergehenden Ansprüche, **dadurch gekennzeichnet, dass** das Verwaltungsverfahren einen Schritt des Anpassens des Öffnungsdurchmessers der ersten Expansionsvorrichtung (7) aufweist, so dass die Unterkühlung des Kühlfluids am Ausgang des Kondensators (5) einen Unterkühlungs-Sollwert (SBC-sp) erreicht, wobei die Unterkühlung gemäß der folgenden Formel berechnet wird:

$$SBC\text{-}calc = TreCO - Tsat(PreCO)$$

wobei SBC-calc die berechnete Unterkühlung, TreCO die Temperatur des Kühlfluids am Ausgang des Kondensators (5) und Tsat(PreCO) die Sättigungstemperatur des Kühlfluids beim Druck des Kühlfluids am Ausgang des Kondensators (5) ist.

4. Vorrichtung zur Verwaltung einer Wärmemanagementvorrichtung (1) nach dem vorhergehenden Anspruch, **dadurch gekennzeichnet, dass** der Unterkühlungs-Sollwert (SBC-sp) gemäß der folgenden Formel bestimmt wird: SBC-sp = (((mr / ln(Pd + 3)) / k) - 1) / $\alpha$ wobei mr der Kühlfluiddurchsatz, Pd der Kühlfluiddruck am Ausgang des Kompressors (3) ist, $\alpha$ = 4,525$^{-2}$, $\beta$ = 1,7308 und k = 14,089 $\times$ d$^2$, wobei d der Soll-Öffnungsdurchmesser der ersten Expansionsvorrichtung (7) in Millimetern für einen optimalen Leistungskoeffizienten ist.

5. Wärmemanagementvorrichtung (1) für ein Kraftfahrzeug, die einen Kühlfluidkreis aufweist, in dem ein Kühlfluid strömen soll, wobei der Kühlfluidkreis Folgendes aufweist:

- eine Hauptschleife (A), die in der Strömungsrichtung des Kühlfluids einen Kompressor (3), einen Kondensator (5), der dazu ausgebildet ist, Wärmeenergie mit einem ersten Element (100) auszutauschen, eine erste Expansionsvorrichtung (7) und einen ersten Verdampfer (11), der dazu ausgebildet ist, Wärmeenergie mit einem zweiten Element (200) auszutauschen, aufweist,
- einen Bypasszweig (B), der parallel zur ersten Expansionsvorrichtung (7) und zum ersten Verdampfer (13) angeordnet ist, wobei der Bypasszweig (B) eine zweite Expansionsvorrichtung (13) und einen zweiten Verdampfer (15), der stromab der ersten zweiten Expansionsvorrichtung (13) angeordnet ist und dazu ausgebildet ist, Wärmeenergie mit einem dritten Element (300) auszutauschen, aufweist, **dadurch gekennzeichnet, dass**

die Wärmemanagementvorrichtung (1) ferner Folgendes aufweist:

- einen ersten Proportional-Integral-Regler (PIreg1), der dazu ausgebildet ist, die Drehzahl des Kompressors (3) je nach der Differenz zwischen der Temperatur (T11-m) des zweiten Elements (200) am Ausgang des ersten Verdampfers (11) und einer Solltemperatur (T11-sp) des zweiten Elements (200) am Ausgang des ersten Verdampfers (11) zu regeln,
- einen zweiten Proportional-Integral-Regler (PIreg2), der dazu ausgebildet ist, die Drehzahl des Kompressors (3) je nach der Differenz zwischen der Temperatur (T15-m) des dritten Elements (300) am Ausgang des zweiten Verdampfers (15) und einer ersten Solltemperatur (T15-sp1) des dritten Elements (300) am Ausgang des zweiten Verdampfers (15) zu regeln,
- einen ersten Addierer (85), der stromauf des Kompressors (3) angeordnet ist und dazu ausgebildet ist, die Drehzahlsignale am Ausgang des ersten (PIreg1) und zweiten (PIreg2) Proportional-Integral-Reglers zu addieren,
- einen dritten Proportional-Integral-Regler (PIreg3), der dazu ausgebildet ist, den Öffnungsdurchmesser der zweiten Expansionsvorrichtung (13) je nach der Differenz zwischen der Temperatur (T15-m) des dritten Elements (300) am Ausgang des zweiten Verdampfers (15) und einer Solltemperatur (T15-sp3) des dritten Elements (300) am Ausgang des zweiten Verdampfers (15) anzupassen,
- eine elektronische Steuereinheit (ECU), die dazu ausgebildet ist, eine zweite Solltemperatur (T15-sp2) des dritten Elements (300) am Ausgang des zweiten Verdampfers (15) je nach der Differenz zwischen der Temperatur (T11-m) des zweiten Elements (200) am Ausgang des ersten Verdampfers (11) und der Solltemperatur (T11-sp) des zweiten Elements (200) am Ausgang des ersten Verdampfers (11) zu bestimmen,
- einen zweiten Addierer (85), der dazu ausgebildet ist, die erste (T15-sp1) und die zweite (T5-sp2) Solltemperatur des dritten Elements (300) am Ausgang des zweiten Verdampfers (15) zu addieren, um die Solltemperatur (T15-sp3) für den dritten Proportional-Integral-Regler (PIreg3) zu bestimmen.

6. Wärmemanagementvorrichtung (1) nach dem vorhergehenden Anspruch, **dadurch gekennzeichnet, dass** sie einen vierten Proportional-Integral-Regler (PIreg4) aufweist, der dazu ausgebildet ist, die zweite Solltemperatur (T15-sp2) des dritten Elements (300) am Ausgang des zweiten Verdampfers (15) je nach einer Vorgabe zu regeln, die von der elektronischen Steuereinheit (ECU) bestimmt ist.

7. Wärmemanagementvorrichtung (1) nach einem der Ansprüche 5 oder 6, **dadurch gekennzeichnet, dass** die Wärmemanagementvorrichtung (1) einen fünften Proportional-Integral-Regler (PIreg5) aufweist, der dazu ausgebildet ist, den Öffnungsdurchmesser der ersten Expansionsvorrichtung (7) je nach der Differenz zwischen der berechneten Unterkühlung (SBC-calc) des Kühlfluids am Ausgang des Kondensators (5) und dem Sollwert (SBC-sp) der Unterkühlung des Kühlfluids am Ausgang des Kondensators (5) anzupassen.

8. Wärmemanagementvorrichtung (1) nach einem der Ansprüche 5 bis 7, **dadurch gekennzeichnet, dass**:

   - der Kondensator (5) ein Wärmetauscher ist, der an der Vorderseite des Fahrzeugs angeordnet ist, und das erste Element (100) ein äußerer Luftstrom ist,
   - der erste Verdampfer (11) ein Wärmetauscher ist, der im Inneren einer Heizungs-, Lüftungs- und Klimatisierungsvorrichtung (X) angeordnet ist, und dass das zweite Element (200) ein innerer Luftstrom mit dem Fahrzeuginnenraum als Ziel ist, und dass
   - der zweite Verdampfer (15) dazu ausgebildet ist, elektrische und/oder elektronische Elemente wie etwa Batterien zu kühlen.

9. Wärmemanagementvorrichtung (1) nach einem der Ansprüche 5 bis 8, **dadurch gekennzeichnet, dass** sie einen Nebenkreis (E) aufweist, in dem das dritte Element (300) strömt, wobei der zweite Verdampfer (15) ein Bifluid-Wärmetauscher ist, der dazu ausgebildet ist, die Wärmeaustauschvorgänge zwischen dem Kühlfluid und dem dritten Element (300) zu ermöglichen.

10. Wärmemanagementvorrichtung (1) nach einem der Ansprüche 5 bis 9, **dadurch gekennzeichnet, dass** sie einen Begrenzer (86) aufweist, der zwischen dem ersten Addierer (85) und dem Kompressor (3) angeordnet ist.

**Claims**

1. Method for managing a thermal management device (1) for a motor vehicle comprising a coolant circuit, in which a coolant is intended to circulate, said coolant circuit comprising:

   - a main loop (A) comprising, in the direction of circulation of the coolant, a compressor (3), a condenser (5) configured to exchange heat energy with a first element (100), a first expansion device (7) and a first evaporator (11) configured to exchange heat energy with a second element (200) ;
   - a bypass branch (B) arranged parallel to the first expansion device (7) and the first evaporator (11), said bypass branch (B) comprising a second expansion device (13) and a second evaporator (15) arranged downstream of the second expansion device (13) and configured to exchange heat energy with a third element (300),
   when at least the first evaporator (11) is used so that the temperature of the second element (200) at the outlet of the first evaporator (11) reaches a setpoint temperature (T11-sp),
   a request to use the second evaporator (15) is issued so that the third element (300) reaches a first setpoint temperature (T15-sp1),
   so that the cooling power required for the simultaneous operation of the first (11) and second (15) evaporators is greater than the maximum cooling capacity of the thermal management device (1), and
   so that the thermal management device (1) receives a request for cooling priority via the first evaporator (11), the management method comprises the following steps:

      - increasing the speed of rotation of the compressor (3) to its maximum speed;
      - determining a modified setpoint temperature (T15-sp3) of the third element (300) that is greater than the first setpoint temperature (T15-sp1) so that the temperature of the second element (200) at the outlet of the first evaporator (11) tends toward its setpoint temperature (T11-sp);
      - adjusting the opening diameter of the second expansion device (13) so that the temperature of the third element (300) at the outlet of the second evaporator (15) reaches a modified setpoint temperature (T15-sp3), until the temperature of the second element (200) at the outlet of the first evaporator (11) reaches the setpoint temperature (T11-sp).

2. Method for managing a thermal management device (1) according to the preceding claim, **characterized in that**,

   when at least the first evaporator (11) is used so that the temperature of the second element (200) at the outlet of the first evaporator (11) reaches a setpoint temperature (T11-sp),
   a request to use the second evaporator (15) is issued so that the third element (300) reaches a first setpoint temperature (T15-sp1),
   so that the required cooling power is greater than the maximum cooling capacity of the thermal management device (1), and

so that the thermal management device (1) receives a request for cooling priority via the second evaporator (15), the management method comprises the following steps:

- increasing the speed of rotation of the compressor (3) to its maximum speed;
- adjusting the opening diameter of the second expansion device (13) until the temperature of the third element (300) at the outlet of the second evaporator (15) reaches the first setpoint temperature (T15-sp1).

3. Method for managing a thermal management device (1) according to any one of the preceding claims, **characterized in that** the management method comprises a step of adjusting the opening diameter of the first expansion device (7) so that the sub-cooling of the coolant at the outlet of the condenser (5) reaches a sub-cooling setpoint value (SBC-sp), the sub-cooling being computed according to the following formula:

$$\texttt{SBC-calc = TreCO-Tsat(PreCO),}$$

with SBC-calc being the computed sub-cooling, TreCO being the temperature of the coolant at the outlet of the condenser (5) and Tsat (PreCO) being the saturation temperature of the coolant at the pressure of the coolant at the outlet of the condenser (5).

4. Method for managing a thermal management device (1) according to the preceding claim, **characterized in that** the sub-cooling setpoint value (SBC-sp) is determined according to the following formula:

$$\texttt{SBC-sp = (((mr / ln(Pd + }\beta\texttt{)) / k) - 1) / }\alpha\texttt{,}$$

with mr being the flow rate of the coolant, Pd being the coolant pressure at the outlet of the compressor (3), $\alpha = 4.525^{-2}$, $\beta = 1.7308$ and $k = 14.089 \times d^2$, d being the theoretical opening diameter of the first expansion device (7) in millimeters for an optimal coefficient of performance.

5. Thermal management device (1) for a motor vehicle comprising a coolant circuit, in which a coolant is intended to circulate, said coolant circuit comprising:

- a main loop (A) comprising, in the direction of circulation of the coolant, a compressor (3), a condenser (5) configured to exchange heat energy with a first element (100), a first expansion device (7) and a first evaporator (11) configured to exchange heat energy with a second element (200) ;
- a bypass branch (B) arranged parallel to the first expansion device (7) and the first evaporator (13), said bypass branch (B) comprising a second expansion device (13) and a second evaporator (15) arranged downstream of the first second expansion device (13) and configured to exchange heat energy with a third element (300), **characterized in that**

the thermal management device (1) further comprises:

- a first proportional-integral controller (PIreg1) configured to control the speed of rotation of the compressor (3) as a function of the difference between the temperature (T11-m) of the second element (200) at the outlet of the first evaporator (11) and a setpoint temperature (T11-sp) of the second element (200) at the outlet of the first evaporator (11);
- a second proportional-integral controller (PIreg2) configured to control the speed of rotation of the compressor (3) as a function of the difference between the temperature (T15-m) of the third element (300) at the outlet of the second evaporator (15) and a first setpoint temperature (T15-sp1) of the third element (300) at the outlet of the second evaporator (15);
- a first adder (85) arranged upstream of the compressor (3) and configured to add the speed of rotation signals output from the first (PIreg1) and second (PIreg2) proportional-integral controllers;
- a third proportional-integral controller (PIreg3) configured to adjust the opening diameter of the second expansion device (13) as a function of the difference between the temperature (T15-m) of the third element (300) at the outlet of the second evaporator (15) and a setpoint temperature (T15-sp3) of the third element (300) at the outlet of the second evaporator (15);
- an electronic control unit (ECU) configured to determine a second setpoint temperature (T15-sp2) of the third element (300) at the outlet of the second evaporator (15) according to the difference between the temperature (T11-m) of the second element (200) at the outlet of the first evaporator (11) and the setpoint temperature (T11-sp) of the second element (200) at the outlet of the first evaporator (11);
- a second adder (85) configured to add the first (T15-sp1) and the second (T5-sp2) setpoint temperature of the third element (300) at the outlet of the second evaporator (15) in order to determine the setpoint temperature (T15-sp3) for the third proportional-integral controller (PIreg3).

6. Thermal management device (1) according to the preceding claim, **characterized in that** it comprises a fourth proportional-integral controller (PIreg4) configured to control the second setpoint temperature (T15-sp2) of the third element (300) at the outlet of the second evaporator (15) as a function of a setpoint determined by the electronic control unit (ECU).

7. Thermal management device (1) according to any one of Claims 5 or 6, **characterized in that** the thermal management device (1) comprises a fifth proportional-integral controller (PIreg5) configured to adjust the opening diameter of the first expansion device (7) as a function of the difference between the computed sub-cooling (SBC-calc) of the coolant at the outlet of the condenser (5) and the setpoint value (SBC-sp) of the sub-cooling of the coolant at the outlet of the condenser (5).

8. Thermal management device (1) according to any one of Claims 5 to 7, **characterized in that**:

    - the condenser (5) is a heat exchanger arranged in the front face of the motor vehicle and the first element (100) is an external air flow;
    - the first evaporator (11) is a heat exchanger arranged within a heating, ventilation and air conditioning device (X) and the second element (200) is an internal air flow intended for the passenger compartment, and
    - the second evaporator (15) is configured to cool electrical and/or electronic elements such as batteries.

9. Thermal management device (1) according to any one of Claims 5 to 8, **characterized in that** it comprises an auxiliary circuit (E), in which the third element (300) circulates, the second evaporator (15) being a dual-fluid heat exchanger configured to allow heat exchanges between the coolant and the third element (300).

10. Thermal management device (1) according to any one of Claims 5 to 9, **characterized in that** it comprises a limiter (86) arranged between the first adder (85) and the compressor (3).

Fig. 1

Fig. 2

Fig. 3

601

602

604

Fig. 4

Fig. 5

## RÉFÉRENCES CITÉES DANS LA DESCRIPTION

**Documents brevets cités dans la description**

- FR 3070316